Europäisches Patentamt

European Patent Office

Office européen des brevets

(11) Veröffentlichungsnummer: **0 504 668 A2**

# EUROPÄISCHE PATENTANMELDUNG

(21) Anmeldenummer: **92103774.3**

(22) Anmeldetag: **05.03.92**

(51) Int. Cl.5: **G06F  1/16**

(30) Priorität: **21.03.91 DE 9103503 U**

(43) Veröffentlichungstag der Anmeldung:
**23.09.92 Patentblatt  92/39**

(84) Benannte Vertragsstaaten:
**AT BE CH DE FR GB IT LI NL**

(71) Anmelder: **Siemens Nixdorf
Informationssysteme Aktiengesellschaft
Fürstenallee 7
W-4790 Paderborn(DE)**

(72) Erfinder: **Hellwig, Bernhard-Edmund, Ing.
Südendstrasse 50
W-8034 Germering(DE)**
Erfinder: **Schmalzl, Dieter
Remboldstrasse 1
W-8900 Augsburg(DE)**

(74) Vertreter: **Fuchs, Franz-Josef, Dr.-Ing. et al
Postfach 22 13 17
W-8000 München 22(DE)**

(54) **Modulares Aufbausystem für Grossrechner.**

(57) Die Erfindung bezieht sich auf ein modulares Aufbausystem für Großrechner, deren Funktionseinheiten wie Zentralprozessoreinheiten (CPU), Stromversorgung (SV), Unternetzverteiler (UNV), Kanaleinrichtungen (KAN) und Serviceprozessoren (SPK), in jeweils eigenen Schränken (1...5) untergebracht sind, die nebeneinander in einer Reihe angeordnet sind und jeweils eine Zentraleinheit (ZE) bilden.

Große Rechnerleistungen werden in zunehmendem Maße durch Bildung von Multiprozessorsystemen erzeugt. Unter dem Aspekt einer stufenweisen Anpassung an den Kundenleistungsbedarf ist es notwendig, dieser Tatsache auch konstruktiv Rechnung zu tragen. Hierfür sieht die Erfindung vor, daß die Schränke (1...5) eine quadratische Grundform aufweisen und jeweils vier Zentraleinheiten (ZE) in Kreuzform angeordnet werden. Die Zentralprozessoreinheiten (CPU) in den dazugehörigen Schränken (1) sind dabei soweit nach hinten versetzt und rückseitig teilweise herausragend angeordnet, daß sich bei Aufstellen der Zentraleinheiten (ZE) in Kreuzform die Schränke (1) der Zentralprozessoreinheiten (CPU) paarweise diametral gegenüber liegen und teilweise mit ihrem rückwärtig überstehenden Teil in einem vorgesehenen Freiraum des jeweils benachbarten Zentralprozessoreinheitenschrankes (1) hineinragen.

FIG 4

Die Erfindung betrifft ein modulares Aufbausystem für Großrechner, deren Funktionseinheiten, wie Zentralprozessoreinheiten, Stromversorgung, Unternetzverteiler, Kanaleinrichtungen und Serviceprozessoren, in jeweils eigenen Schränken untergebracht sind, die jeweils nebeneinander in einer Reihe angeordnet sind und eine Zentraleinheit bilden.

Aufgabe der vorliegenden Erfindung ist es, ein modulares Aufbausystem für Großrechner zu schaffen, das stufenweise an den Leistungsbedarf anpaßbar ist, wobei die Länge der internen Leitungsverbindungen ein Minimum sein soll.

Zur Lösung dieser Aufgabe sieht die Erfindung vor, daß die Schränke eine quadratische Grundform aufweisen, daß die Zentralprozessoreinheiten in den dazugehörigen Schränken soweit nach hinten versetzt und rückseitig teilweise herausragend angeordnet sind, daß sich beim Aufstellen der Zentraleinheiten in Kreuzform die Schränke der Zentraleinheiten paarweise diametral gegenüberliegen und teilweise mit ihrem rückwärtig überstehenden Teil in den so entstandenen Freiraum des jeweils benachbarten Zentralprozessoreinheitenschrankes hineinragen.

Durch diese Maßnahmen wird ein modulares Aufbausystem geschaffen, durch das der stufenweise Ausbau der Zentraleinheiten an den jeweiligen Leistungsbedarf in einfacher Weise ermöglicht wird. Die Leitungslänge der internen Logikverbindungen wird gegenüber einem herkömmlichen Aufbau erheblich reduziert.

Anhand der Ausführungsbeispiele nach den FIG 1 bis 5 wird die Erfindung näher erläutert. Es zeigen

FIG 1 eine Übersicht über die möglichen Ausbaustufen,

FIG 2 ein Grundmodell der ersten Ausbaustufe,

FIG 3 eine Detaildarstellung im Zentralprozessoreinheitenbereich eines voll ausgebauten Systems,

FIG 4 eine Variante nach FIG 3,

FIG 5 eine perspektivische Darstellung eines voll ausgebauten Systems.

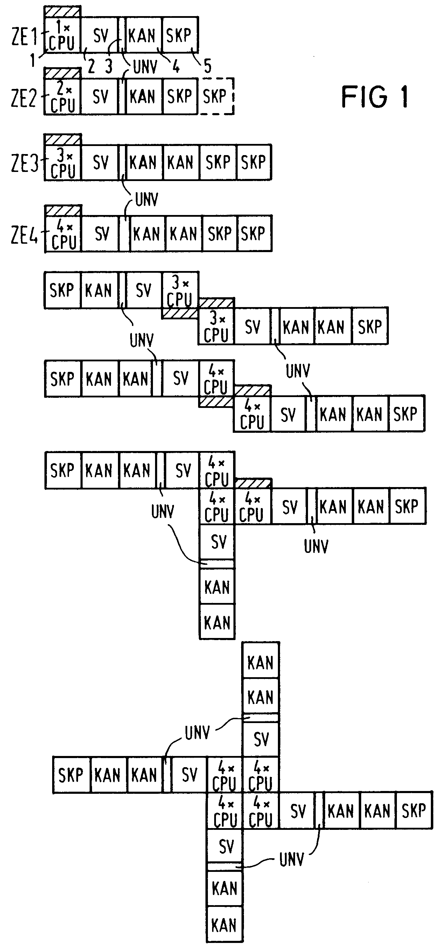

FIG 1 zeigt in der Reihenfolge von oben nach unten die unterschiedlichen Stufen des möglichen Ausbaus. In der ersten Stufe ist lediglich ein Schrank 1 mit einer Zentralprozessoreinheit CPU nötig, neben dem ein Stromversorgungsschrank mit den Steuerversorgungseinheiten SV, ein Schrank 3 für einen Unternetzverteiler UNV, ein Schrank 4 für Kanaleinrichtungen KAN und ein weiterer Schrank 5 für Serviceprozessoren SKP vorgesehen ist. Diese fünf Schränke bilden die Grundform einer Zentralprozessoreinheit ZE1. In der zweiten Stufe des Ausbaus (ZE2) wird lediglich im Schrank 1 für die Zentralprozessoreinheiten CPU eine weitere Zentralprozessoreinheit CPU eingebaut und eventuell ein weiterer Serviceprozessorschrank 5 hinzugefügt. In der dritten Stufe des Ausbaus (ZE3) läßt sich eine dritte Zentralprozessoreinheit CPU in den Zentralprozessoreinheitsschrank 1 einbauen und je nach Bedarf ein Schrank 4 für Kanaleinrichtungen hinzufügen. In der vierten Ausbaustufe (ZE4) wird nunmehr eine vierte Zentralprozessoreinheit CPU in den Schrank 1 für Zentralprozessoreinheiten eingebaut, so daß nunmehr dieser Schrank 1 voll bestückt ist, während in der fünften Stufe des Ausbaus nun beispielsweise zwei Zentraleinheiten ZE3 diametral gegenüberliegend in einer Richtung, jedoch mit den Schränken 1 der Zentralprozessoreinheiten CPU nebeneinandere stehend, aufebaut sind. Dabei sind in diesem Fall jeweils drei Zentralprozessoreinheiten CPU im Zentralprozessoreinheitenschrank 1 vorhanden. In der sechsten Aufbaustufe können zwei Zentraleinheiten der vierten Ausbaustufe ZE4 nebeneinander in Reihe angeordnet sein, während in der siebten Ausbaustufe nunmehr bereits drei Zentraleinheiten der vierten Stufe ZE4 angeordnet sind, wobei zur vorhergehenden Ausbaustufe senkrecht dazu eine weitere Zentraleinheit der vierten Ausbaustufe ZE4 hinzugefügt wird. Insgesamt erhält man bei dieser Ausbaustufe bereits die zwölffache Leistung. In der letzten Ausbaustufe wird dann die Leistung versechzehnfacht, wobei nunmehr vier Zentraleinheiten ZE4 in Kreuzform so aufgestellt sind, daß die Schränke 1 der Zentralprozessoreinheiten den Kreuzungspunkt dieser kreuzförmigen Anlage bilden.

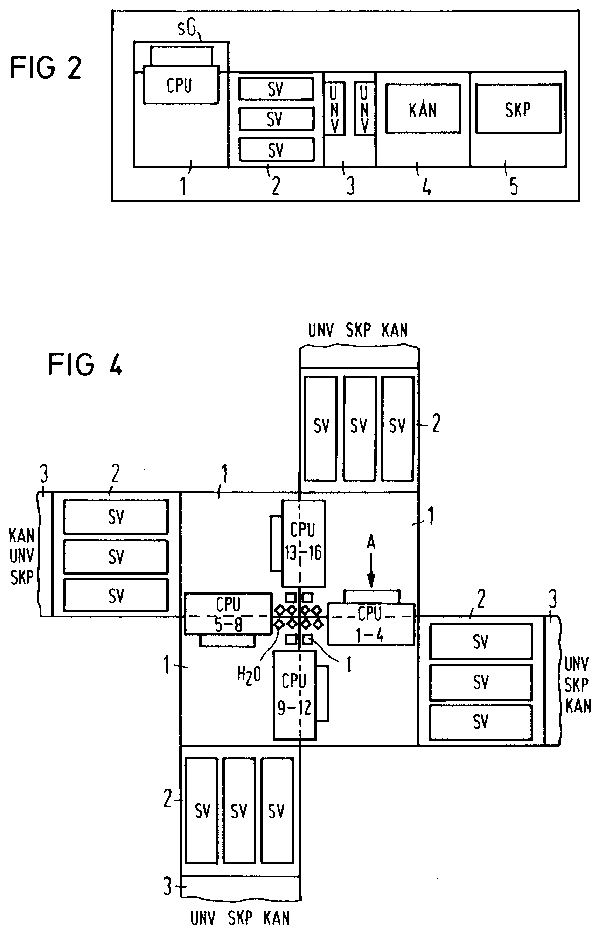

In FIG 2 ist ein Grundmodell der ersten Ausbaustufe (ZE1) im Detail dargestellt. Die Zentralprozessoreinheiten im Zentralprozessorschrank 1 sind nach hinten versetzt, so daß sie über die Rückwand des Schrankes 1 hinausragen. Für den Transport sind sie mit einem Schutzgitter SG versehen, das beim Zusammenbau abgenommen werden kann. Der vordere Teil des Schrankes erhält damit einen Freiraum. Diesem Zentralprozessoreinheitenschrank 1 schließt sich dann der Stromversorgungsschrank 2 mit jeweils drei Stromversorgungseinrichtungen SV an. Ihm folgt wieder der Unternetzverteilerschrank 3 sowie die Schränke 4, 5 für die Kanaleinrichtungen KAN und den Serviceprozessor SKP.

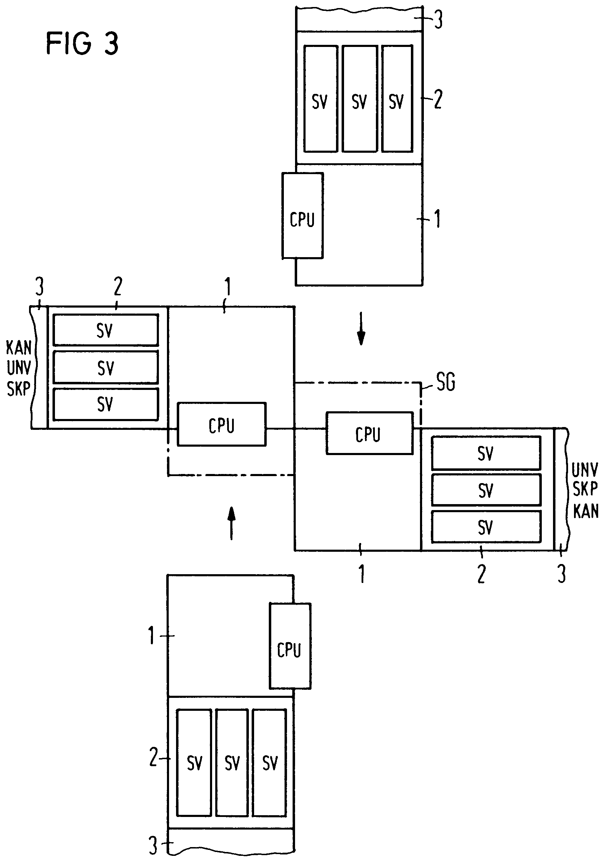

Das Detailbild nach FIG 3 zeigt zwei bereits in der Endposition stehende Zentraleinheiten in waagrechter Form und dazu senkrecht zwei weitere Zentraleinheiten ZE4, die sich noch nicht im endgültigen Einbauzustand befinden.

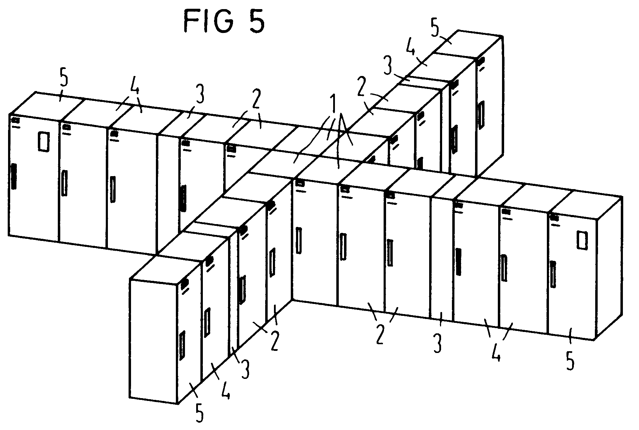

In FIG 4 sind dann alle vier Zentraleinheiten ZE4 bereits im endgültigen Aufbauzustand dargestellt. Man erkennt, daß die rückwärtigen Teile der Zentralprozessoreinheiten CPU in die jeweiligen Freiräume des benachbarten Zentralprozessoreinheitenschrankes 1 hineinragen. Zu diesem Zweck müssen an dieser Stelle die Abdeckungen der Schränke abgenommen werden und gleichzeitig der vertikale Gerüstholm zweier Grundmodelle entfernt werden. Die Darstellung nach FIG 4 zeigt außerdem insofern eine Variante zu FIG 3, da bei dieser Figur im Kreuzungsmittelpunkt die Stromzuführungen I und die Wasserzuführungen H2O vorgenommen werden.

Eine perspektivische Darstellung der in Kreuzform angeordneten Schränke zeigt die FIG 5.

**Patentansprüche**

1. Modulares Aufbausystem für Großrechner, deren Funktionseinheiten, wie Zentralprozessoreinheiten, Stromversorgung, Unternetzverteiler, Kanaleinrichtungen und Serviceprozessoren, in jeweils eigenen Schränken untergebracht sind, die jeweils nebeneinander in einer Reihe angeordnet sind und eine Zentraleinheit bilden, **dadurch gekennzeichnet,** daß die Schränke (1...5) eine quadratische Grundform aufweisen, daß die Zentralprozessoreinheiten (CPU) in den dazugehörigen Schränken (1) soweit nach hinten versetzt und rückseitig teilweise herausragend angeordnet sind, daß sich beim Aufstellen der Zentaleinheiten (ZE) in Kreuzform die Schränke (1) der Zentraleinheiten (CPU) paarweise diametral gegenüberliegen und teilweise mit ihrem rückwärtig überstehenden Teil in den so entstandenen Freiraum des jeweils benachbarten Zentralprozessoreinheitenschrankes (1) hineinragen.

FIG 1

FIG 2

FIG 4

# FIG 3

FIG 5